# DEMANDE DE BREVET EUROPEEN

(11) **EP 0 624 020 A1**
(43) Date de publication de la demande: **09.11.1994**
(21) Numéro de dépôt: 94400899.4
(22) Date de dépôt: 26.04.1994
(51) Int. Cl.: H04M 1/00

(54) **Dispositif de surveillance permanente de l'intégrité d'une ligne téléphonique**

(30) Priorité: 04.05.1993 FR 9305306
(71) Demandeur: FRANCE TELECOM, F-75015 Paris (FR)
(72) Inventeur: Corneux, Michel, F-52000 Chaumont (FR)
(74) Mandataire: Armengaud Ainé, Alain

(57) **Abrégé**

Dispositif de surveillance permanente de l'intégrité d'une ligne téléphonique, assurant la transmission d'un signal d'alarme, comportant un détecteur de courant de ligne (9) et un contrôleur (10) de la tension entre les deux fils (2, 3) de cette ligne, montés dans un circuit de contrôle (14) agencé de telle sorte que la détection simultanée d'une absence de courant dans la ligne et d'une chute de tension, conséquence d'une anomalie persistante, correspondant à une coupure de la ligne soit immédiatement perceptible, et un circuit de temporisation (15), en série avec le circuit de contrôle, de telle sorte que l'anomalie détectée ne soit prise en compte qu'au-delà d'un seuil de durée minimale.

Selon l'invention, ce dispositif se caractérise en ce qu'il comporte, en série avec le circuit de temporisation, à la sortie du circuit de contrôle, un circuit de commande (16) d'une alarme locale, comprenant au moins un relais (70) dont le basculement est déterminé par un signal issu du circuit de contrôle.

## Description

La présente invention est relative à un dispositif de surveillance permanente de l'intégrité d'une ligne téléphonique, adaptée à transmettre par le réseau commuté national un signal d'alarme en cas d'intrusion non autorisée d'un tiers dans un local sous le contrôle d'un appareil de détection, agencé pour émettre un signal acheminé sur cette ligne sous la forme d'une ou de plusieurs impulsions, voire d'un message vocal, à destination d'un décodeur ou d'un usager qui est ainsi immédiatement averti de l'intrusion, l'envoi de ce signal ou message étant généralement doublé par le déclenchement d'une sirène ou autre appareil émettant un son de grande amplitude pendant une durée suffisante.

Les systèmes d'alarme électroniques, qui associent à un détecteur d'instrusion dans un endroit déterminé, généralement une habitation ou des locaux industriels ou commerciaux, consécutivement au franchissement d'un corps étranger dans un faisceau d'ondes hyperfréquences, infrarouges ou ultrasonores, une installation téléphonique qui envoie vers un poste récepteur situé à distance un signal caractérisant l'intrusion constatée, sont bien connus dans la technique et utilisent le plus souvent un appareil de détection qui élabore un signal électronique ou un message vocal, automatiquement transmis par le poste téléphonique du possesseur de l'habitation ou du local vers un autre poste situé à distance, en prévenant ainsi de cette intrusion.

Toutefois, ces systèmes sont mis en échec lorsque le cambrioleur ou intrus qui pénètre dans le local, a préalablement pris la précaution de sectionner la ligne téléphonique de l'abonné propriétaire du local visité, en anéantissant ainsi tout renvoi possible par la ligne du signal élaboré par l'appareil de détection. Dans ce cas, seul est déclenchée la sirène d'alarme dont l'effet dissuasif n'est pas toujours déterminant, soit parce que le local est isolé dans son environnement, soit parce que le déclenchement d'une sirène de ce genre est de plus en plus considéré comme un évènement banal ou accidentel, soit encore parce que, au bout d'un temps plus ou moins bref, la sirène elle-même est stoppée, ses moyens d'alimentation électrique ne permettant pas de la maintenir en action au-delà d'une durée donnée.

Dans ces conditions, outre que la coupure de la ligne annihile le système, elle entraîne ultérieurement des frais de réparation importants, à la charge du prestataire de services qui entretient la ligne téléphonique et qui est tenu d'une garantie d'usage, l'obligeant à assurer une remise en état rapide. Lorsque la ligne en cause fait partie d'une des nombreuses paires d'un câble ordinaire, la réparation est d'autant plus coûteuse que celle-ci doit s'effectuer très rapidement pour l'ensemble du câble, quelle que soit l'importance des dégâts occasionnés sur ce dernier.

L'invention a donc pour objet un dispositif de surveillance de l'intégrité d'une ligne téléphonique, qui évite ces inconvénients, en permettant le déclenchement d'une alarme locale dès que la ligne est coupée et non pas seulement lorsque, celle-ci étant sectionnée, l'intrus est repéré par l'appareil de détection, cette alarme étant mise en oeuvre par le simple isolement de la ligne, en témoignant immédiatement de la mise hors service du renvoi téléphonique à distance.

Le cas échéant, l'alarme locale ainsi déclenchée peut être affectée à une ligne spécialisée, distincte de la ligne normale de l'usager et dont l'extrémité réunit un organe de contrôle, par exemple situé dans un poste de Police ou autre, en avertissant ainsi de la coupure provoquée sur la ligne normale et en prévenant directement des préparatifs d'intrusion qu'elle annonce. A noter que toute autre forme d'utilisation du contact de sortie du système d'alarme peut bien entendu être envisagée, notamment par transmission par voie hertzienne, soit par envoi radio de l'information de rupture vers une station relativement proche avec un nouveau routage à partir de cette dernière par le réseau téléphonique commuté, soit par regroupement sur une centrale radiophonique et, de même, transmission sur le réseau, par exemple en utilisant un poste téléphonique sans fil portable, du type "Radiocom 2000", commercialisé à l'heure actuelle pour l'équipement de véhicule automobile.

On connaît déjà, par les brevets américains US-A-4 969 178 et US-A-5 056 131, des dispositifs de détection d'anomalies sur une ligne téléphonique, qui contrôlent simultanément la présence de la tension électrique d'alimentation de la ligne et du courant dans celle-ci, de manière à constater leur absence simultanée, traduisant une coupure de la ligne. Toutefois, de tels dispositifs ne sont pas adaptés à l'application plus particulièrement visée par la présente demande qui permet, en cas de coupure de la ligne, de fournir encore un signal d'alarme, ces dispositifs n'étant pas en outre prévus pour empêcher que ce déclenchement ne se produise à la suite d'une simple coupure momentanée due à un effet parasite sur la ligne.

Plus particulièrement encore, on connaît par le FR-A-91 01486 au nom du demandeur, publié sous le N° 2 672 757, et par son correspondant européen 0 498 734, un dispositif pour la détection d'un branchement non autorisé sur une ligne téléphonique d'abonné. Ce dispositif comporte un détecteur de courant de ligne et un contrôleur de la tension entre les deux fils de cette ligne, montés dans un circuit de contrôle agencé de telle sorte que la détection simultanée d'une absence de courant dans la ligne et d'une chute de tension, conséquence d'une anomalie pouvant notamment correspondre à un branchement direct avec isolement de la ligne, ou à la mise en parallèle sur celle-ci d'un autre poste non autorisé, soit immédiatement perceptible. Selon les brevets précités, le dispositif comporte également un circuit de temporisation, en série avec le circuit de contrôle, de telle sorte que l'anomalie détectée ne soit prise en compte qu'au-delà d'un seuil de durée minimale.

La présente invention vise une application différente du dispositif ci-dessus, adapté cette fois à la détection d'une rupture de la ligne et non plus à celle d'un branchement parasite, assurant l'élaboration instantanée d'un signal d'alarme, tout en permettant de discriminer la coupure ainsi constatée vis-à-vis du fonctionnement ordinaire de la ligne, aussi bien en réception d'un appel avec émission d'une sonnerie au poste appelé, qu'en usage normal où l'abonné, après avoir décroché son poste, entre en conversation avec l'appelant ou inversement établit une communication avec un tiers après avoir formulé le numéro d'appel de ce dernier.

Selon l'invention, le dispositif du genre précité, se caractérise en ce qu'il comporte, en série avec le circuit de temporisation, à la sortie du circuit de contrôle, un circuit de commande d'une alarme locale, comportant au moins un relais et dont le basculement est déterminé par un signal issu du circuit de contrôle.

Lorsqu'une ligne téléphonique est au repos, le courant dans la ligne est inexistant, la tension électrique continue entre les deux fils de cette ligne correspondant à un niveau donné, prédéterminé. En revanche, lorsque cette ligne est soit en phase de réception d'un appel avec émission d'un courant de sonnerie, soit en usage normal, correspondant à une conversation ou à la phase préliminaire de numérotation d'un poste appelé, existe dans la ligne un courant, la tension continue n'étant pas modifiée dans le premier cas où se superpose seulement à celle-ci une tension alternative de sonnerie, ou bien subissant une baisse dans le second cas.

Par contre, si la ligne est interrompue, notamment du fait de son sectionnement, ou encore est isolée ou bouclée sur elle-même, en amont de l'installation, le courant de ligne au niveau de l'installation reste nul reste nul en même temps que se produit cette fois une chute de la tension continue, celle-ci devenant d'ailleurs égale à zéro en cas de coupure ou de boucle franche.

Le dispositif selon l'invention permet de réaliser dans le circuit de contrôle une détection de la valeur du courant de ligne et un contrôle de la tension entre les deux fils de cette dernière, la détection simultanée de l'absence de courant et de tension, permettant, après temporisation appropriée, correspondant à une anomalie permanente et non pas transitoire ou momentanée, telle qu'elle se produit en particulier après une coupure de la ligne, d'élaborer un signal de commande qui, par fermeture d'un relais, déclenche l'alarme locale signalant immédiatement cette coupure.

Avantageusement et selon une caractéristique particulière du dispositif considéré, l'alarme locale reste enclenchée pendant toute la durée de la coupure, au-delà du seuil de durée minimale imposé par le circuit de temporisation.

De préférence également, le relais du dispositif de commande est un relais électromagnétique, comprenant une bobine d'enroulement munie de moyens de protection contre les courants de rupture dans cet enroulement, constitués par une diode montée en inverse en parallèle sur cet enroulement.

D'autres caractéristiques d'un dispositif selon l'invention, apparaîtront encore à travers la description qui suit d'un exemple de réalisation, donné à titre indicatif et non limitatif, en référence aux dessins annexés sur lesquels :
- La Figure 1 est un schéma illustrant le raccordement d'une ligne téléphonique à un poste d'abonné, par l'intermédiaire du dispositif de surveillance selon l'invention.
- La Figure 2 illustre en détail un mode de réalisation particulier du dispositif considéré.

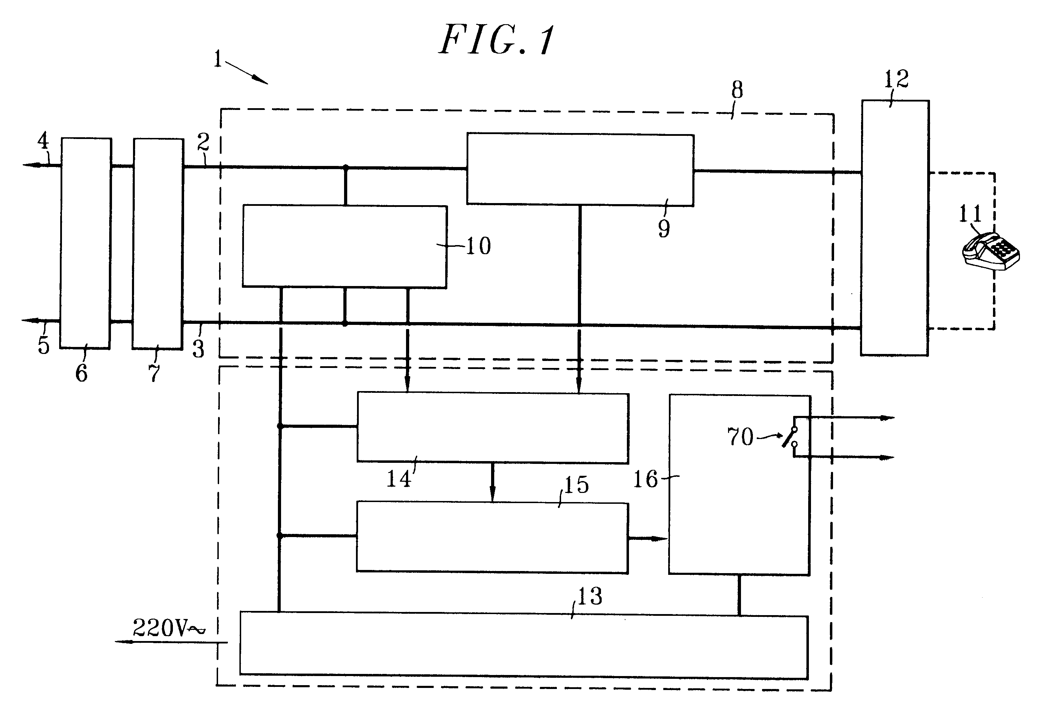

Sur la Figure 1, la référence 1 désigne de façon schématique une installation d'abonné à laquelle aboutissent les deux fils, respectivement 2 et 3, d'une ligne téléphonique. Ceux-ci se prolongent par leurs extrémités 4 et 5 vers un central de commutation (non représenté). Les fils 2 et 3 de la ligne sont raccordés de façon classique à des réglettes de distribution, respectivement 6 et 7, la réglette 6 étant par exemple celle qui assure le raccordement de l'ensemble des lignes destinées à un immeuble et la réglette 7 celle de l'abonné, à l'arrivée de la ligne qui lui est destinée.

Comme déjà envisagé dans les brevets français et européen du demandeur précités, l'installation 1 est muni d'un dispositif de contrôle désigné dans son ensemble sous la référence 8 et comportant en particulier un détecteur de courant de ligne 9 monté en série sur l'un des fils, par exemple le fil 2 de la ligne et un contrôleur 10 de la valeur de la tension continue entre les fils 2 et 3, ces derniers étant réunis à un transmetteur d'alarme téléphonique 12 du commerce, sur lequel peut être éventuellement raccordé un combiné téléphonique usuel 11, par l'intermédiaire d'un conjoncteur de raccordement (non représenté) usuel 11 par l'intermédiaire d'un conjoncteur de raccordement 12.

Le dispositif 8 permet ainsi de contrôler l'état de la ligne et de repérer à tout instant la valeur du courant dans cette ligne et de la tension continue entre ses fils, respectivement par l'intermédiaire du détecteur 9 et du contrôleur 10. Il comporte par ailleurs un circuit d'alimention 13, raccordé d'une part au secteur de distribution électrique à 220 v. alternatifs, et délivrant à sa sortie une tension continue de 5 v. qui alimente les divers circuits du dispositif, permettant de traiter les signaux fournis par le détecteur 9 et le contrôleur 10. Cette tension continue est de préférence filtrée et régulée ; en outre, le circuit 13 est avantageusement muni d'une batterie d'accumulateurs ou de piles de secours, permettant de suppléer à une panne éventuelle du secteur, en maintenant en permanence les divers circuits sous tension.

Le circuit 13 alimente ainsi un circuit de détection d'anomalie, notamment adapté à repérer une coupure effectuée sur la ligne, en particulier en amont des réglettes de raccordement 6 et 7, un circuit de temporisation 15 monté en série à la sortie du circuit de détection 14 et enfin un circuit 16 de commande d'une alarme locale, précisément déclenchée lorsque le circuit de détection 14 a repéré une telle coupure et a fourni au circuit de commande 16 un signal approprié pris en compte au-delà d'un seuil de durée minimale imposé par le circuit de temporisation 15.

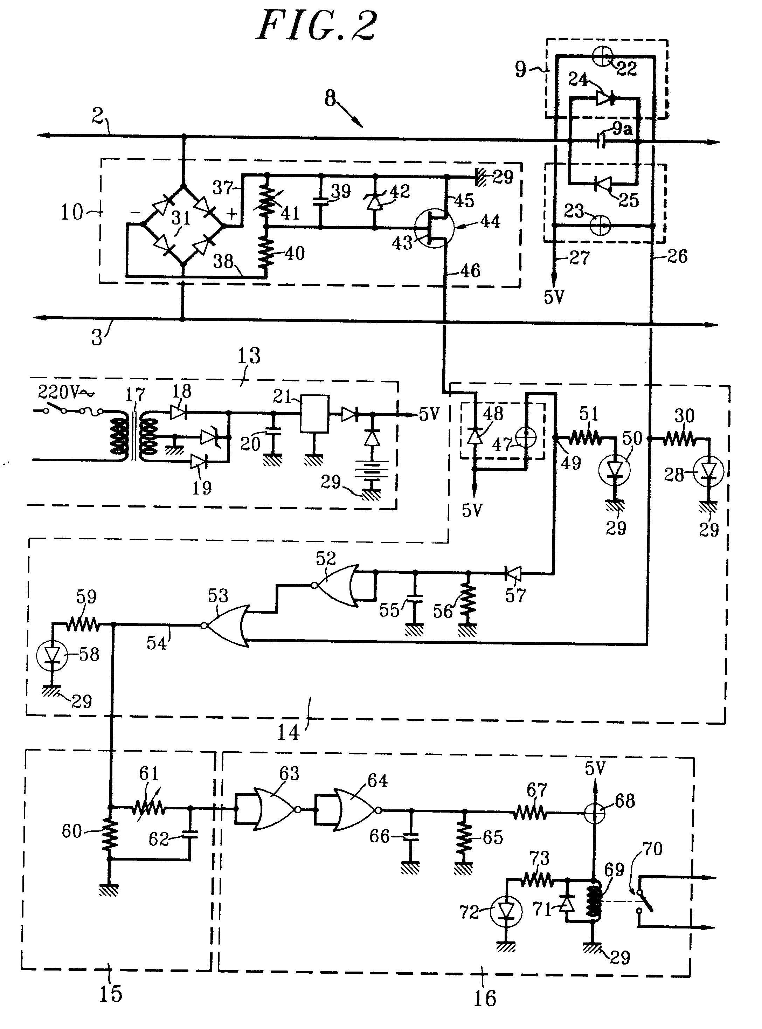

La Figure 2 illustre avec plus de détails un mode de réalisation particulier du dispositif 8 de détection et de contrôle et des divers circuits qu'il comporte.

Le circuit d'alimentation 13 comprend ainsi un transformateur à basse tension 17, alimenté par le secteur à 220 volts et délivrant à sa sortie une tension de 5 volts, redressée au moyen de deux diodes 18 et 19 en opposition, puis filtrée au moyen d'un condensateur 20 et régulée en 21, pour délivrer en sortie une tension continue stable de 5 volts.

Le détecteur de courant de ligne 9 comporte deux phototransistors 22 et 23, dont les diodes d'entrée 24 et 25 sont disposées dans un montage anti-parallèle, avec leurs sorties en parallèle, de sorte que la conduction de l'une ou l'autre de ces diodes se produise quel que soit le sens du courant dans la ligne. La sortie 26 du montage est réunie à l'entrée du détecteur d'anomalie 14 de la manière indiquée plus loin, tandis que son entrée 27 est raccordée à la sortie du circuit d'alimentation 13 et ainsi portée au potentiel de 5 volts. Une diode électroluminescente 28 est montée entre la masse 29 et la sortie 26 du détecteur 9 par l'intermédiaire d'une résistance 30, s'allumant lorsque passe un courant dans la ligne et en jouant le rôle de témoin lumineux. Avantageusement est diposé sur la ligne entre les diodes 24 et 25 un condensateur 9a afin de limiter la valeur du courant de sonnerie dans ces diodes, tout en permettant le passage dans la ligne des signaux de conversation émis ou reçus par l'abonné, sans les affaiblir.

Le contrôleur de tension 10 monté entre les fils 2 et 3 de la ligne, comporte principalement un pont redresseur 31 dont les sorties 37 et 38 sont réunies par un diviseur de tension, comportant notamment un condensateur 39 et une résistance 40, une résistance variable 41 permettant d'ajuster la valeur de la tension fournie pour obtenir une détection fiable, quelles que soient les caractéristiques et la valeur de la tension entre les deux fils de la ligne. Une diode Zener 42 limite la tension de grille, tandis que le condensateur 39 en parallèle limite tout risque d'impulsion parasite.

La tension à la sortie du montage ainsi réalisé est appliquée à la grille 43 d'un transistor à effet de champ 44 dont la source 45 est raccordée à la masse 29, tandis que le drain 46 est réuni à un phototransistor 47 par l'intermédiaire de la diode d'entrée 48 de ce dernier, elle-même raccordée à la sortie du circuit d'alimentation et portée en conséquence à la tension de 5 volts. La présence d'un signal sur la sortie 49 du photransistor 47 est détectée par une seconde diode électroluminescente 50 par l'intermédiaire d'une résistance 51, ce signal étant acheminé avec celui recueilli à la sortie 26 du détecteur 9 à une seconde entrée du détecteur d'anomalie instantanée 14.

Le détecteur 14 comporte deux portes NOR, respectivement 52 et 53, montées de telle sorte qu'il fournisse sur sa sortie 54 un signal lorsqu'il constate une tension sur la sortie 49 du contrôleur 10, alors qu'aucun signal n'est en revanche présent sur la sortie 26 du détecteur de courant de ligne 9. Une cellule comportant un condensateur 55 et une résistance 56, associée à une diode 57, permet au circuit détecteur 14 de ne prendre en compte que des impulsions d'une durée minimale déterminée, d'au moins une seconde dans l'exemple considéré, afin de ne pas prendre pour un branchement non autorisé, un bouclage accidentel et très bref entre les deux fils de la ligne, pouvant résulter d'une manoeuvre intempestive, par exemple lors de travaux effectués sur cette ligne. Une troisième diode électroluminescente 58 est montée en parallèle sur la sortie du détecteur d'anomalie entre la masse 29 et une résistance 59, cette diode permettant ainsi de repérer visuellement que les conditions correspondant à la présence d'une telle anomalie ont été remplies.

Le signal fourni à la sortie 54 du détecteur 14 est acheminé vers le temporisateur 15, celui-ci étant essentiellement constitué d'une résistance 60 en parallèle sur une résistance variable 61 et un condensateur 62, de telle sorte que la cellule R-C ainsi constituée ne transmette au compteur 16 que des signaux correspondants à des anomalies détectées d'une durée supérieure à un seuil déterminé, ce qui est bien le cas d'une coupure franche de la ligne, cette durée de l'ordre de préférence de 30 secondes dans l'exemple considéré, étant ajustable par la résistance variable 61. Une décharge rapide du condensateur est assurée par la résistance 60 lors de la disparition de l'anomalie repérée par le détecteur 14, ce qui permet ainsi d'éliminer la prise en compte d'anomalies transitoires de faible durée.

Le signal à la sortie du circuit de temporisation 15, traverse deux portes NOR 63 et 64 en série, associées en sortie à une cellule comportant une résistance 65 et un condensateur 66 pour la remise en forme de ce signal. Celui-ci est alors acheminé à travers une résistance 67 à un étage à transistor 68, alimentant l'enroulement 69 d'un relais électromagnétique de commande 70. Sur l'enroulement 69, est montée en inverse une diode de protection 71 contre les courants de rupture lors de l'ouverture ou de la fermeture du relais. Une diode électroluminescente 72, en série avec une résistance 73 permet de contrôler le fonctionnement du relais et en particulier d'indiquer visuellement que la ligne a été coupée ou est en indisponibilité.

Le relais 70 qui se ferme dans les conditions précédemment décrites où le circuit a détecté une coupure de ligne, peut alors commander une alarme locale (non représentée), par exemple constituée par une sirène ou autre instrument analogue. Le cas échéant, le relais peut également provoquer l'émission d'un signal distinct sur une ligne téléphonique spécialisée, reliée à un poste de Police par exemple, avertissant que la ligne normale a été coupée, en permettant alors de vérifier que cette coupure ne constitue pas le préalable à une intrusion dans le local protégé par l'installation. A noter que, comme déjà indiqué précédemment, le contact de sortie du système d'alarme peut être réuni à un dispositif de transmission par radio, notamment du genre déjà mentionné.

On réalise ainsi un dispositif permettant d'assurer la surveillance permanente de l'intégrité d'une installation de protection comportant un renvoi d'alarme par ligne téléphonique, la détection et le contrôle du courant et de la tension continue dans la ligne traduisant, au-delà d'un seuil de temps prédéterminé, défini par un circuit temporisateur paramétrable, un état anormal et notamment la coupure délibérée de la ligne. Les diodes électroluminescentes montées dans le circuit constituent des témoins auxiliaires de l'état de celui-ci et en particulier de la détection instantanée d'une anomalie temporaire, puis d'une anomalie durable, déclenchant l'alarme locale prévue conformément à l'invention.

Le dispositif peut être aisément réalisé à l'intérieur d'un boîtier de faibles dimensions, pouvant être facilement raccordé à la ligne, en particulier au moyen d'une prise gigogne classique au niveau du conjoncteur de l'installation dans le cas où celle-ci ne comporte qu'une seule prise et un seul poste. L'entretien d'un tel appareil est pratiquement inexistant, son coût pouvant être par ailleurs relativement minime.

Bien entendu, il va de soi que l'invention ne se limite pas à l'exemple de réalisation décrit et représenté ; elle en embrasse au contraire toutes les variantes.

## Revendications

**1 -** Dispositif de surveillance permanente de l'intégrité d'une ligne téléphonique, assurant la transmission d'un signal d'alarme, comportant un détecteur de courant de ligne (9) et un contrôleur (10) de la tension entre les deux fils (2, 3) de cette ligne, montés dans un circuit de contrôle (14) agencé de telle sorte que la détection simultanée d'une absence de courant dans la ligne et d'une chute de tension, conséquence d'une anomalie persistante, correspondant à une coupure de la ligne soit immédiatement perceptible, et un circuit de temporisation (15), en série avec le circuit de contrôle, de telle sorte que l'anomalie détectée ne soit prise en compte qu'au-delà d'un seuil de durée minimale, caractérisé en ce qu'il comporte, en série avec le circuit de temporisation, à la sortie du circuit de contrôle, un circuit de commande (16) d'une alarme locale, comprenant au moins un relais (70) dont le basculement est déterminé par un signal issu du circuit de contrôle.

**2 -** Dispositif selon la revendication 1, caractérisé en ce que l'alarme locale est enclenchée pendant toute la durée de la coupure, au-delà du seuil de durée minimale imposé par le circuit de temporisation (15).

**3 -** Dispositif selon l'une des revendications 1 ou 2, caractérisé en ce que le relais (70) est un relais électromagnétique comprenant une bobine d'enroulement (69), munie de moyens de protection contre les courants de rupture dans cet enroulement, constitués par une diode (71) montée en inverse en parallèle sur cet enroulement.

**4 -** Dispositif selon l'une quelconque des revendications 1 à 3, caractérisé en ce que le seuil réglable est ajusté au moyen d'une résistance variable (61) en série avec un condensateur (62).

**5 -** Dispositif selon l'une quelconque des revendications 1 à 4, caractérisé en ce que le détecteur de courant de ligne (9) comporte un jeu de deux photocoupleurs (22, 23), dont les entrées sont réunies à deux diodes (24, 25) montées en anti-parallèle et dont les sorties sont disposées en parallèle, de sorte que la conduction de l'une ou l'autre de ces diodes soit provoquée par le courant dans la ligne, quel que soit le sens de celui-ci.

**6 -** Dispositif selon la revendication 5, caractérisé en ce qu'un condensateur (9a) est monté en parallèle sur les photocoupleurs afin de limiter la valeur du courant de sonnerie dans les diodes, tout en permettant le passage dans la ligne des signaux de conversation et de sonnerie, sans les affaiblir.

**7 -** Dispositif selon l'une quelconque des revendications 1 à 6, caractérisé en ce que le contrôleur de tension (10) entre les deux fils de la ligne, comporte un pont de redresseurs (31), dont la tension d'entrée est la tension de la ligne, la tension de sortie alimentant la grille (43) d'un transistor à effet de champ (44) de telle sorte qu'en cas de chute de la tension dans la ligne, la tension à la grille du transistor diminue, rendant celui-ci conducteur de façon à alimenter la diode d'entrée (48) d'un photocoupleur (47).
